# EUROPEAN PATENT SPECIFICATION

(11) **EP 0 875 732 B1**
(45) Date of publication and mention of the grant of the patent: **03.03.2004**
(21) Application number: 98302576.8
(22) Date of filing: 01.04.1998
(51) Int. Cl.: G01D 3/02, G01D 5/244

(54) **Method for centering a signal within the dynamic range of a peak detecting proximity detector**
Verfahren zur Zentrierung eines Signals innerhalb des dynamischen Bereiches eines spitzendetektierenden Näherungssensors
Procédé de centrage d'un signal dans le domaine dynamique d'un capteur de proximité à détection de crêtes

(30) Priority: 07.05.1997 US 852856; 28.04.1997 US 847683
(43) Date of publication of application: 04.11.1998
(73) Proprietor: ALLEGRO MICROSYSTEMS INC., Worcester, Massachusetts 01615 (US)
(72) Inventor: Moody, Kristann L., Barrington, New Hampshire 03825 (US); Vig, Ravi, Bow, New Hampshire 03304 (US); Scheller, P. Karl, Rochester, New Hampshire 03867 (US); Towne, Jay M., Newbury, New Hampshire 03255 (US); Tu, Teri L., Bow, New Hampshire 03304 (US)
(74) Representative: Crawford, Andrew Birkby

(56) References cited:
- DE-A- 19 600 803
- US-A- 4 318 617

## Description

### Background

This invention relates to a peak-referenced-threshold detecting type proximity detector, and especially to a ferrous-gear-tooth transducer including a Hall element and a Hall voltage amplifier, and more particularly relates to such a transducer in which the transducer output voltage signal peaks are automatically centered within the dynamic range of the detector.

The term "magnetic article" as used herein applies to magnetized bodies, ferrous bodies and other bbdies having a low magnetic reluctance that tend to alter the ambient magnetic field.

In the patent U.S. 5,442,283, issued August 15, 1995 there is described an integrated circuit Hall-voltage proximity-detector, which employs a Hall-signal peak-referenced-threshold detector. The integrated circuit chip is mounted to a pole of a magnet. A peak-referenced-threshold type of signal detector tracks a slope of a Hall voltage (e.g. corresponding to the approach of a passing gear tooth) and briefly holds the ensuing peak voltage before producing an output signal indicating the onset of the following Hall-voltage slope of opposite direction (e.g. corresponding to the approach of a valley between two gear teeth).

In this patent, the Hall voltage holding circuit includes a capacitor and a circuit means for controllably leaking charge out of or into the capacitor for preventing false tripping of a comparator that provides the transition in the binary output signal. The holding voltage of the capacitor thus has a droop which leads to increasing loss of holding accuracy as the speed of gear tooth passage becomes slower, and therefore the detector has a minimum gear teeth speed at which accurate detection is possible. A capacitor used in the engine compartment of an automobile is typically required to operate over the temperature range of -40°C to 170°C.

When a peak-referenced-threshold detector of the kind described in the patent 5,442,283, is so used, the associated peak holding capacitor must have a very high leakage resistance to prevent missing the correct cylinder-firing times at start-up (crank start). Even use of such an expensive capacitor would cause the missing of the first one or two firing times.

Most proximity detectors of the prior art produce a high binary output voltage indicating approach and proximity of a passing article, and produce a low binary voltage when the article recedes from the detector. The signal detector is conventionally of a type that may be called the mid-signal referenced threshold detector, or just the mid-signal detector type, wherein the transition in detector output voltage from low to high typically is triggered by a comparator that determines when the transducer voltage rises to (or falls from) a fixed internal threshold voltage referenced to a voltage level corresponding to the median or average value of the Hall signal.

Alternatively, in the case of the peak-referenced-threshold detector in the above-described patent, the detector output transition occurs when a transducer voltage peak has just occurred and the transducer signal voltage has dropped by an amount equal to a predetermined threshold voltage from the peak value.

Proximity detectors having fixed threshold voltages, produce low to high (or high to low) binary transitions in the output signal indicating approach of a magnetic article. In practice, the closest passing distance (sometimes referred to as the air gap) does not remain constant.

Variations of the air gap dimension causes shifts in the actual distances of article approach and receding at which the transducer voltages exceeds or falls below the fixed thresholds. This results in a lack of accuracy of passing detection that may rule out their use as position detectors of passing articles such as can and gear teeth.

Changes in the air gap, between passing articles to be detected and the transducer, may be attributable to mechanical and electrical properties of the detector as well as the properties of the passing articles, especially as a function of temperature.

Other causes of inaccuracy stem from the fact that the amplitude of the Hall voltage changes when gear teeth (magnetic articles) have different ferromagnetic properties from tooth to tooth, and/or when undulating changes in the spacings (aor gap) of gear teeth to detector are caused by eccentricity of the gear. Also, changes in temperature cause changes in air gap dimensions and in the sensitivity of the transducer and transducer-voltage amplifier.

Whether detection is accomplished by sensing the Hall voltage peaks or using a voltage threshold criteria for indicating approach of a passing article, changes in the median amplitude of the transducer voltage degrade the accuracy of position detection because the Hall signal is not centred within the dynamic range of the Hall signal detector.

DE 196 00 803 A discloses a sensing system in which magnetoresistive elements detect rotation of a gear, to produce an alternating amplitude signal. The difference between the sensor signal and a reference voltage is amplified by an operational amplifier having a differential gain exceeding its operational limit relative to the amplitude value of the sensor signal. Comparators judge whether the output of the operational amplifier (op-amp) is within a predetermined amplitude range, and in response to a deviation the reference voltage is changed closer to the output of the op-amp. Another comparator compares the output signal of the op-amp with a threshold value to output a binary-valued signal.

US-A-4 318 617 discloses an electro-optical measuring system utilizing a sin/cos signal pair to determine the extent and direction of physical displacement, in which the maxima and minima of the signals are regularly sampled, the median DC levels of the signals are derived from those values and compared with a reference DC level, and any detected differences are applied as corrective factors to position measurement signal values.

It is an object of this invention to provide a proximity detector having a magnetic-field-to-voltage transducer and providing automatic centering of the transducer output voltage with the dynamic range of the transducer-signal detector.

It is a further object of this invention to combine automatic gain control with the automatic centering of transducer output voltage within the dynamic range of a capacitor-less transducer-signal detector of the peak-reference-threshold type, to provide great accuracy of detection down to zero speed.

### Summary of the Invention

A proximity-detection method for detection of passing magnetic articles includes sensing the ambient magnetic field, generating a voltage, Vₕ, having an amplitude that is directly related to the magnetic field, and applying Vₕ to the input of an amplifier to produce at an output thereof an amplified voltage, Vsig. There is provided a signal detector to which Vsig is applied, which detector produces a binary proximity-detector output voltage Vout having transisitions of one polarity each time excursions of one polarity in Vsig reach a predetermined point therein. Sources are provided of DC off-set-limit voltages V_{A} and V_{B}, corresponding to the positive and negative limits of the dynamic range of the detector, and the median voltage, Vos, of Vsig is determined, the median voltage having a value substantially centred between the most recent positive and negative peaks of Vsig.

When at the output of the amplifier the median voltage, Vos, of Vsig is greater than V_{A}, the entire signal Vsig is moved in a negative direction, when the median value, Vos, of Vsig is less than V_{B} the entire signal Vsig is moved in a positive direction to keep Vos within the dynamic range of the detector, namely from V_{B} to V_{A}.

The median voltage Vos may be produced by continuously generating one reference voltage V_{P2} that is equal to the most recent peak positive going excursion in Vsig, by continuously generating another reference voltage V_{N2} that is equal to the most recent peak negative going excursion in Vsig, and by generating the median voltage, Vos, at within about ten percent of the center of the voltage range between V_{P2} and V_{N2}.

In yet another way, the moving of the signal Vsig may be accomplished by counting the transitions of at least one polarity in Vout during intervals when Vos is greater than V_{A} and generating a digital signal for adding to Vsig a negative compensating off-set bias voltage by one predetermined negative bias increment at each transition of the one polarity in Vout, and by counting the transitions of the at least one polarity in Vout during intervals when Vos is less than V_{B} and generating a digital signal for adding to Vsig a positive compensating off-set bias voltage by one predetermined positive bias increment at each transition of the one polarity in Vout.

The method of this invention may also include an automatic gain control (AGC) feature whereby the amplifier is a digitally gain-controlled amplifier, and there are added the additional steps of comparing the amplitudes of the excursions of at least one polarity in Vsig to a predetermined target value, V_{TG}; generating a binary signal Vbig that changes from one to another binary level each time that Vsig exceeds the target value, applying the binary signal Vbig to the digitally-gain-controlled amplifier and when Vbig changes from the one to another binary level changing the gain of the digitally-gain-controlled amplifier by one predetermined gain increment in the direction to bring the peak values in Vsig to just below the predetermined target value.

Finally, there is generated a binary proximity-detector output voltage Vout having transitions of one polarity each time excursions of one polarity in Vsig reach a predetermined point therein.

When in this invention the AGC feature is included, changing of the amplifier gain includes clocking the incremental changes in gain by transitions in Vout, whereby the speed at which gain may be changed is directly related to the rate at which magnetic articles are passing. This advantageously limits the rate at which adjustments in gain can be made, and assures a speed of gain change less than that which would lead to large changes in the point in successive excursions in Vsig at which proximity detection is effected. In other words, there will be less "jitter" in the timing of transitions in the binary output signal Vout from the detector,

Likewise, the automatic off-set adjustment feature of this invention may include clocking incremental changes in gain at transitions in Vout, whereby the off-set adjustment rate changes only incrementally at each transition in Vout so that changes in the point in successive excursions in Vsig at which proximity detection is effected is again kept small. The result is even greater proximity detection accuracy and less jitter in the transitions in the detector output signal. It is preferred that the signal detector is a peak-referenced-threshold detector that holds the peaks of at least one polarity until the signal retreats from each peak by a predetermined threshold voltage value that defines the predetermined point in Vsig.

The automatic offset control feature of this invention makes it possible to provide a maximally large Hall signal just within the dynamic range of the Hall-signal detector which leads to unparalleled accuracy in proximity-detector accuracy, even at magnetic article speeds down to zero.

### BRIEF DESCRIPTION OF THE DRAWINGS

Figure 1 shows a block diagram of a magnetic-article proximity detector of this invention.

Figure 2 shows a waveform of the Hall (transducer) voltage signal, during passage of four magnetic articles, superimposed on a waveform of the output voltage signal V_{P1} from the PDAC1.

Figures 3, 4, 5, 6, 7 and 8 are drawn to the same time scale as that of Figure 2.

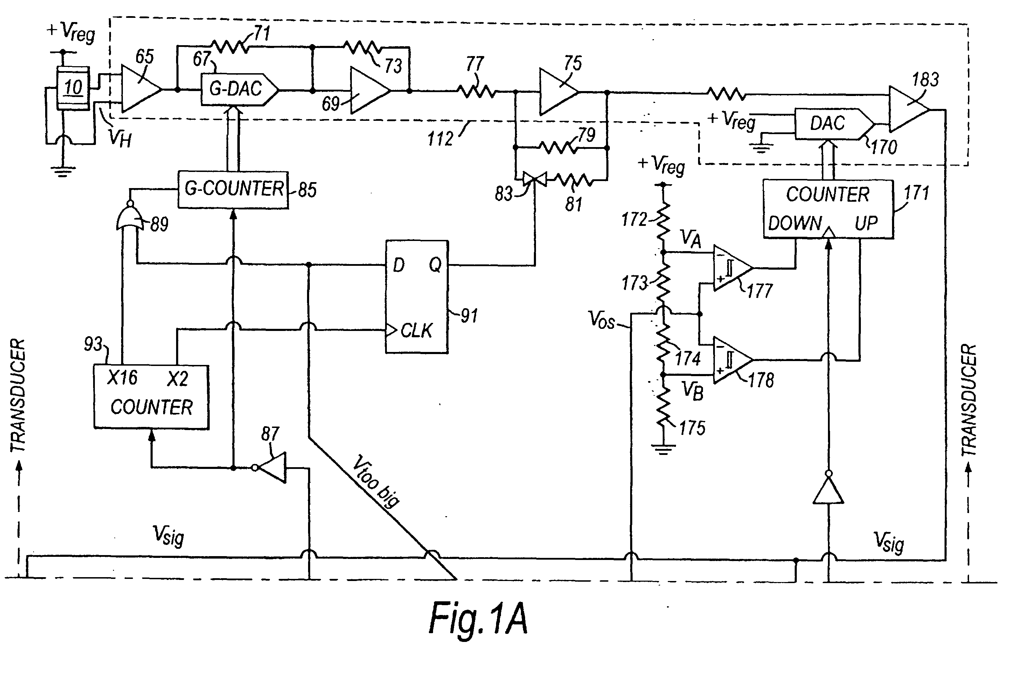

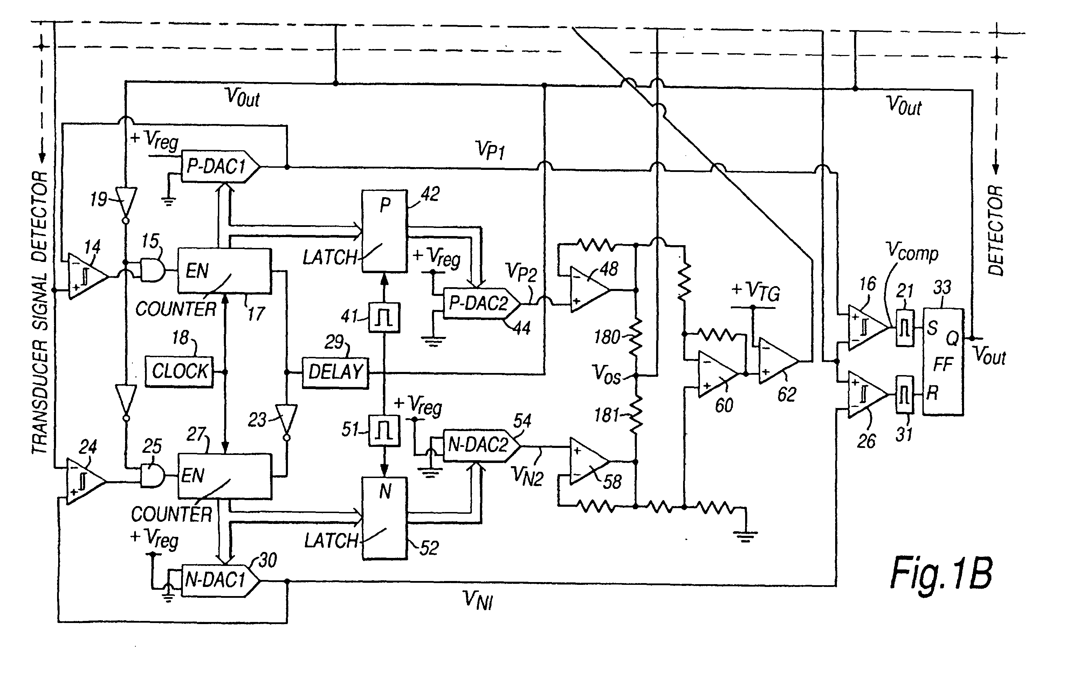

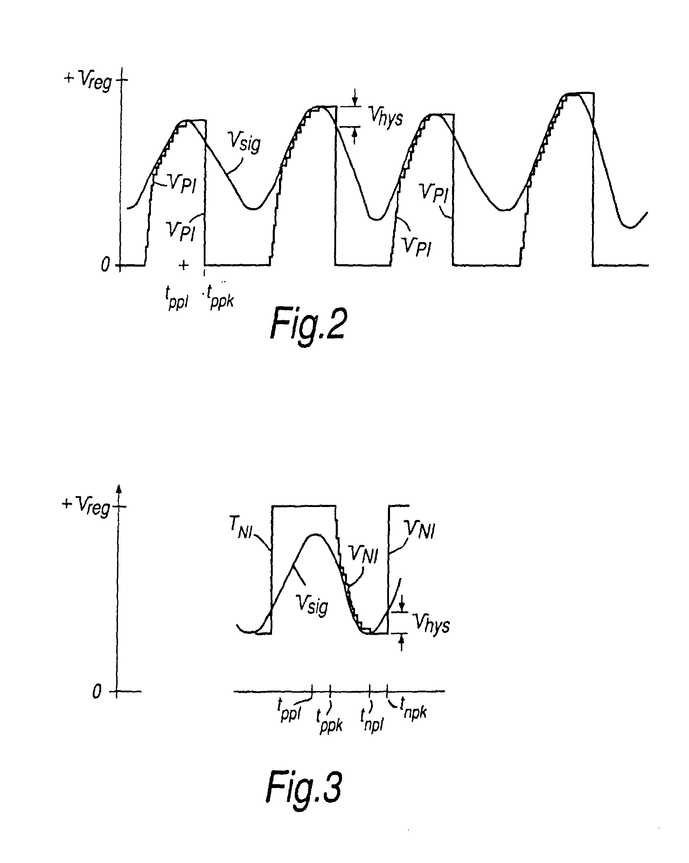

Figure 3 shows a partial waveform of the output voltage signal V_{N1} from the NDAC1 in Figure 1.

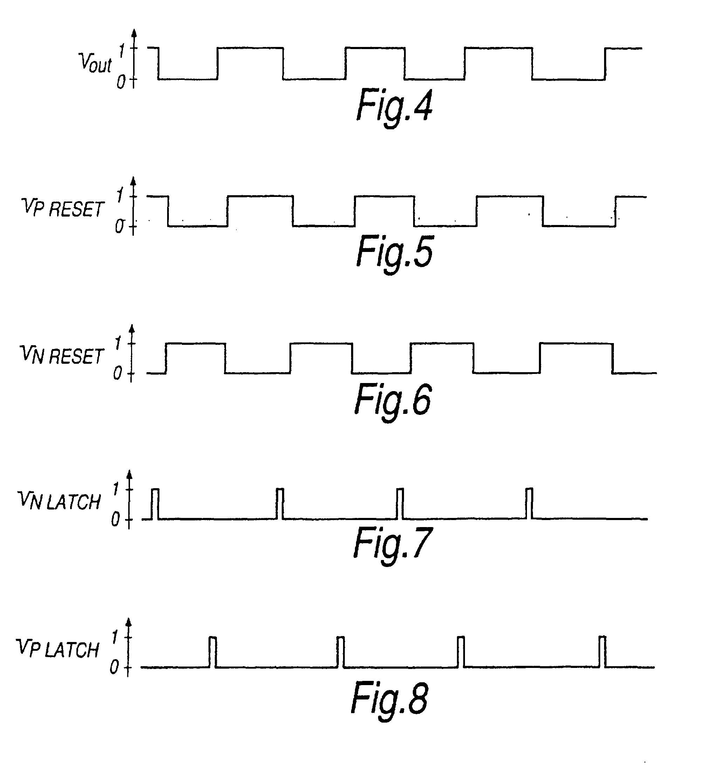

Figure 4 shows a waveform of output voltage, Vout, of the proximity-detector of Figure 1.

Figure 5 shows a waveform of the reset signal to the counter 17 in the proximity-detector of Figure 1.

Figure 6 shows a waveform of the reset signal to the counter 27 in the proximity-detector of Figure 1.

Figure 7 shows a waveform of the latch enable signal to the N latch 52 in the proximity-detector of Figure 1.

Figure 8 shows a waveform of the latch enable signal to the P latch 42 in the proximity-detector of Figure 1.

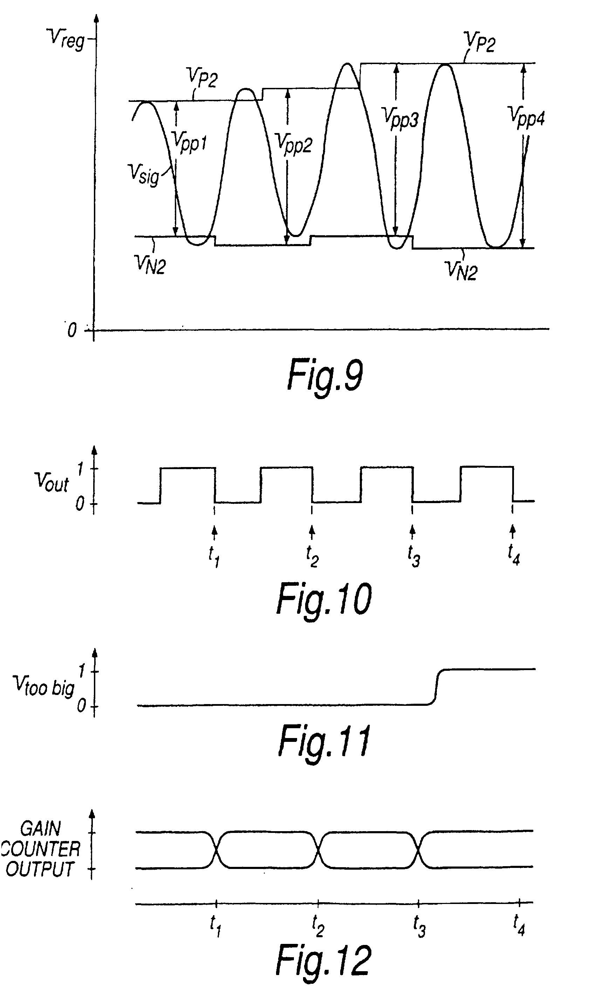

Figure 9 shows a waveform of the Hall (transducer) voltage signal, during passage of a few magnetic articles, having superimposed thereon the corresponding output signals V_{P2} and V_{N2} from PDAC2 and NDAC2 in the proximity detector of Figure 1.

Figures 10, 11 and 12 are drawn to the same time scale as that of Figure 9.

Figure 10 shows a corresponding waveform of output voltage, Vout, of the proximity-detector of Figure 1.

Figure 11 shows a corresponding output signal waveform of comparator 62, V_{toobig,} in the proximity-detector of Figure 1.

Figure 12 shows corresponding waveforms of the binary output voltages from the first two bits in gain counter (G-COUNTER) 85 of the proximity-detector of Figure 1.

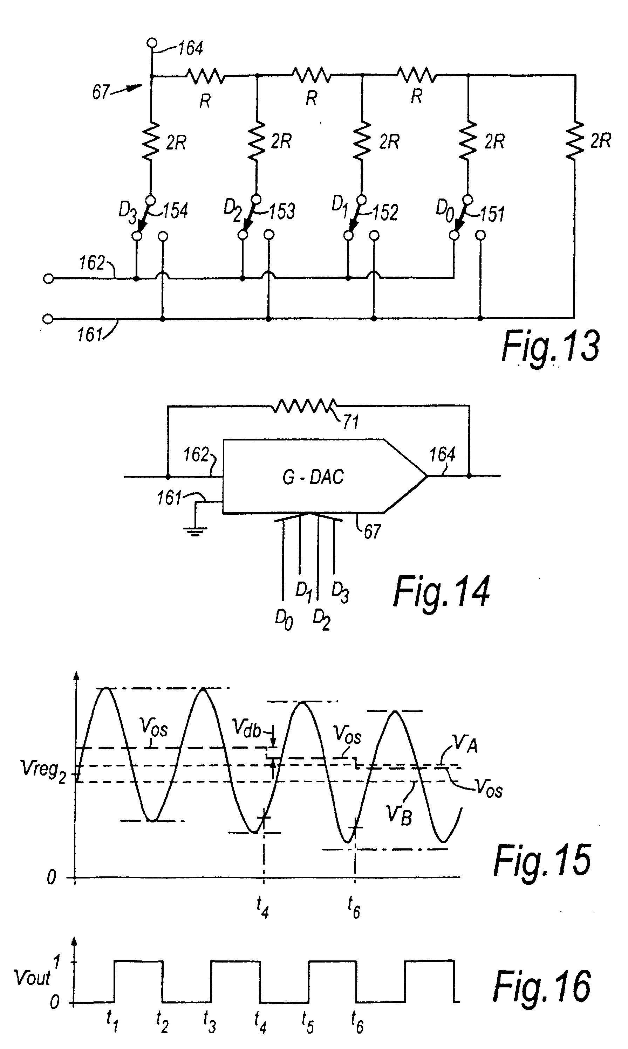

Figure 13 shows a circuit diagram of an R/2R digital-to-analog converter (DAC).

Figure 14 shows a block diagram 67 of the DAC of Figure connected as a digitally controllable resistor, such as may be employed as the G-DAC 85 in Figure 1.

Figure 15 shows a waveform of the Hall (transducer) voltage signal in the proximity detector of Figure 1 with no AGC action, during passage of a few magnetic articles, having superimposed thereon the corresponding waveform of the offset level signal Vos.

Figure 16 shown the waveform of Vout drawn to the same time scale as the waveform Vsig and Vos in Figure 15.

### DESCRIPTION OF PREFERRED EMBODIMENTS

The Hall element 10 of Figure 1 has an output connected to the input of a Hall voltage amplifier 112. Hall element 10 may mounted at a pole of a magnet (not shown), so that when a ferrous article approaches, the Hall voltage V_{H} and thus the amplified Hall voltage Vsig increase (or decrease). When the article recedes, V_{H} and Vsig decrease (or increase depending upon the polarity of the magnet pole). Alternatively, the detector circuit of Figure 1 may be used to detect magnetic articles that themselves are magnetized, in which case the Hall element need not be mounted with a magnet.

A magneto resistors bridge (not shown) may be substituted for the Hall element. Two Hall elements with their outputs connected differentially to the input of the Hall voltage amplifier (not shown) represent a second alternative magnetic-field-to-voltage transducer.

The amplified Hall voltage, Vsig, is manipulated by the remaining circuits in the proximity detector of Figure 1 to produce a square wave proximity-detector output signal, Vout, that like a shadow graph reflects the profile of the passing articles.

The amplified Hall voltage Vsig is applied to the positive input of a first comparator 14 via AND gate 15, and is also applied to the plus input of a second comparator 16. The amplified Hall voltage Vsig is further applied to the negative input of the other first comparator 24 and to the plus input the other second comparator 26.

Assuming, as a starting point, that the counter 17 is at zero count, when the output of the first comparator 14 goes high the counter 17 begins counting the clock pulses from clock 18. The resulting count is presented to the digital-to-analog converter (PDAC1) 20 which produces an output analog voltage V_{P1} always lying somewhere within the range from zero to the DC supply voltage, +Vreg. At any instant the amplitude of V_{P1} is a direct linear function of the count signal from counter 17. When power is first applied to the detector circuit, a logic block (not shown) senses the time of turning on of the DC supply voltage, +Vreg, and resets the counters to zero count.

The comparator 14 has hysteresis and so is a Schmitt type comparator. The output of the DAC 20 (PDAC1) is connected to the negative input of the comparator 14 so that whenever Vsig becomes greater than voltage V_{P1} plus the small hysteresis threshold voltage of the comparator 14, then the comparator 14 output goes high. If at that time Vout is low, then the output of AND gate 15 goes high and the counter 17 is enabled and counting. When Vsig is growing more positive, V_{P1} is caused to track Vsig in stair step fashion, as is illustrated in Figure 2. The incremental vertical excursions of the stair stepped V_{P1} are equal to Vreg/2ⁿ, where n is the number of DAC bits. The incremental horizontal times, 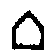 t1, increase as the slope of Vsig decreases.

As is illustrated in Figure 2, when a peak positive voltage of Vsig is reached, the counter 17 stops counting at a time tₚₚ₁, and V_{P1} holds this peak voltage until time tₚₚₖ. At time tₚₚₖ, Vsig falls below the held voltage V_{P1} by an amount Vhys equal to the threshold of comparator 16, and the output of comparator 16 goes high briefly setting the flip flop 33 so that Vout goes from low to high, as seen in Figure 4.

Vout is applied to the reset input of the counter 17 via a delay circuit 29, resetting and holding the count in counter 17 to zero at time tₚₚₖ (Figure 5) for as long as the reset signal V_{Preset} is high; thus V_{P1} remains at zero volts for that time also. At a subsequent positive pulse in the signal Vsig, V_{P1} again begins to track the subsequent positive pulse to its peak and to hold that new peak voltage. The reset signal (Figure 6) resets and holds reset the counter 27 at times tₙₚₖ for as long as the reset signal V_{Nreset} is high.

A lower (N) circuit portion in the proximity detector of Figure 1 essentially mirrors the construction of the upper (P) portion just described. The lower circuit portion manipulates the negative pulses in Vsig in the same way as does the upper portion with respect to positive pulses in Vsig.

For example, as is illustrated in Figure 3, when a peak negative voltage of Vsig is reached, the counter 27 stops counting at a time tₙₚ₁, and V_{N1} holds this peak voltage until time tₙₚₖ. At time tₙₚₖ, Vsig falls below the held voltage V_{N1} by an amount Vhys equal to the threshold of comparator 26, and the output of comparator 26 goes high to reset the flip flop 33 so that Vout goes from high to low, as seen in Figure 4.

The part of the proximity detector of Figure 1 described above operates in a peak-referenced-threshold detecting mode. Such a detector is the subject of a patent application, Serial No. 08/587,405, entitled DETECTION OF PASSING MAGNETIC ARTICLES AT SPEEDS DOWN TO ZERO, that is assigned to the same assignee as is the current application and was filed concurrently herewith. That application describes the proximity detector circuit and operation in greater detail.

The remainder of the circuit in Figure 1 relates to circuitry for the automatic gain control circuit of the Hall voltage.

The count signals from counters 17 and 27 is also applied, via latches 42 and 52 respectively to PDAC2 44 and NDAC2 54. The P-latch 42 and N-latch 52 are enabled by signals V_{Platch} (Figure 7) and V_{Nlatch} (Figure 8) from one shot generators 41 and 51 respectively.

The one shot generators 41 and 51 are triggered respectively by a low to high transition in the signal Vout and by a high to low transition in Vout (Figure 4). The output signals V_{P2} and V_{N2} from PDAC2 and NDAC2 are shown in Figure 9 as they relate to each other and to Vsig, and Vout is drawn to the same scale in Figure 10.

Now to recapitulate, the output of comparators 24 and 26 go high only when Vsig goes negative. Thus only when Vsig is going negative are there changes of state in the signals of AND gate 25, counter 27, NDAC1 30, latch 52, NDAC2 54, buffer 58 and window comparator 56. The upper (P) and lower (N) portions of the circuit share the clock 18 and the reset delay circuit 29. Referring to Figure 3, this tracking of Vsig begins at a time tₚₚₖ at which a low to high transition in Vout occurs.

Counters 17 and 27 only count upwardly. It should be noted that the DC reference voltages +Vreg and ground are connected to NDAC1 30 and NDAC2 54 inversely with respect to those connections to PDAC1 20 and PDAC2 44; therefore as the count in counter 27 goes up, the output V_{N1} of the NDAC1 30 goes down as seen in Figure 3. But, both of the NDACS 30 and 54 could have been connected to the DC reference voltages as are the PDACs 20 and 44 if the counter 27 had been of the kind that counts down from maximum count. The counters 17 and 27 are of the kind that include an anti-overflow feature that prevents wrapping of the count when maximum count is exceeded.

The signals V_{P2} and V_{N2} are applied via buffer stages 48 and 58 to the two inputs of a fixed-gain differential amplifier 60. The output signal of amplifier 60, Vpp, is the difference voltage between V_{P2} and V_{N2}, which difference voltage is essentially equal to the peak to peak value of Vsig. As Vsig grows, it is tracked by Vpp as seen in Figure 9.

The signal Vpp is applied to one input of a comparator 62. A reference voltage V_{TG} is applied to the other comparator 62 input. When Vpp exceeds V_{TG} the output signal V_{toobig} of comparator 62 is at a high binary level. When Vpp is less than V_{TG}, V_{toobig} is at a low binary level.

The Hall-voltage (V_{H}) amplifier 12 includes a fixed-gain amplifier stage 65; a programmable-gain amplifier composed of a digital-to-analog converter G-DAC 67, two resistors 71 and 73, and an operational amplifier 69; a step-wise adjustable-gain amplifier composed of an operational amplifier 75, three resistors 77, 79 and 81, and a switch 83; and an automatic off-set adjust circuit including a voltage-divider connected DAC 170, an up-down counter 171, a voltage-divider network composed of resistors 172, 173, 174 and 175, two Schmitt comparators 177 and 178, a voltage divider composed of resistors 180 and 181, and a differential amplifier 183.

A counter 85 is an up counter which does not wrap after the maximum count is reached, and has a count output connected to the G-DAC 67. The signal Vout is inverted by invertor 87, and counter 85 counts positive transitions in the inverted signal Vout. G-DAC 67 is connected internally as a digitally programmable resistor having a maximum resistance when the input count to the DAC is zero.

The resistor 71 in parallel with the resistance of G-DAC 67 sets the total input resistance to the operational amplifier 69 at its highest value at zero count which sets the gain of the amplifier at its lowest value.

When the first positive and negative excursions in Vsig generate a signal Vpp1 (Figure 9) that is lower than the reference voltage V_{TG}, the signal V_{toobig} is low (Figure 11) and enables counter 85 via inverting NOR gate 89. Counter 85 responds by counting up by one count at the next positive transition in inverted signal Vout as indicated in Figure 12. This causes a single increment of gain increase, which is illustrated in Figure 9 wherein Vpp1 grows to Vpp2 and Vsig increases slightly in amplitude in the period from t₁ to t₂.

This process of testing the amplitude of (Vpp and thus Vsig) against a target reference value V_{TG} and adjusting the gain upward one increment when the target has not yet been reached, continues for as many periods in Vsig (and Vout) as is necessary to set the peak to peak amplitude of Vsig to the target value, V_{TG}.

When the target value has been reached or exceeded, V_{toobig} goes high (Figure 11), so the counter 85 being thus disabled does not count further as illustrated in Figure 12 and the gain of the amplifier remains fixed (e.g. between times t₃ and t₄ in Figure 9) thereafter (until the detector has been turned off and started up again).

However, when the first positive and negative excursions in Vsig generate a signal Vpp1 (Figure 9) that is higher than the reference voltage V_{TG}, the signal V_{toobig} is high for disabling counter 85 via inverting NOR gate 89, and holding the D input of the flip flop 91 high.

Counter 93 is a serial counter that provides one output at which the signal is low until the counter has counted two (more generally a few) positive excursions in the inverted signal Vout, at which time the invertor 87 output goes high and clocks through the high at the D input of flip flop 91 to the flip flop Q output.

This clocking of a high signal through flip flop 91 occurs when the non inverted signal Vout (Figure 10) goes low. After the first two periods in Vsig, switch 83 closes to connect feedback resistor 81 which decreases the gain of the amplifier composed of operational amplifier 75 and resistors 77 and 79. For example, the operational amplifier gain may be reduced by a factor of 4, causing the gain of amplifier 12 to be reduced by a factor of 4.

Thus during the first two positive pulses in the transducer voltage Vsig it is determined whether the peak to peak voltage of Vsig (Vₚₚ) is too big relative to the target reference voltage V_{TG}. If it is not too big, the G-counter is enabled (by signal V_{toobig}), the resistance of G-DAC 67 immediately begins to fall and the gain of that count-controllable gain stage rises to the target value at which it remains thereafter.

But if during the first two positive pulses in the transducer voltage Vsig (corresponding to the passing of two magnetic articles), it is determined that the peak to peak voltage (Vₚₚ) of Vsig is too big relative to the target reference voltage V_{TG}, then after two pulses in Vsig the overall gain of amplifier 12 is reduced by a factor of 4, and the count-controllable gain stage brings the peak to peak value of Vsig up to the target value.

Counter 93 is a serial up-counter of the kind that does not wrap. It counts up only and is not reset until de-energized and again energized. Counter 93 provides a second serial count output that goes high at the larger count of 16 excursions (pulses) in Vsig (or Vout). The x16 output is low until the count 16 has been reached. A high output signal from the x 16 output of counter 93 at the count of 16 disables the G-counter 85 to limit how many (e.g. 16) periods in Vsig (e.g. negative going excursions in Vsig and/or Vout) may be counted by the G-counter 85 to adjust the gain. Alternatively, the counting of positive going excursions would be equally effective.

The purpose of effecting automatic gain adjustment, for only a few of the first pulses in Vsig following turning on the supply voltage +Vreg and starting the detection of passing articles, is to obtain optimum transducer-voltage amplifier gain for the conditions at starting and to maintain constant gain thereafter in order to avoid incremental shifts in the actual distance of approaching articles at which a corresponding transition in Vout occurs. When gain changes take place continuously frequent shifts in detection approach distance cause jitter in the Vout transitions.

In the above described embodiment, the gain of amplifier 12 is adjusted during the first 16 periods in Vsig (corresponding to the passage of the first 16 magnetic articles) and thereafter held fixed, providing a fast initial gain adjustment after which no further adjustments are made.

This feature is particularly suitable in a proximity detector for use in a combustion engine ignition system, wherein all the adjustments in gain occur only during crank start of the engine. During the subsequent loading and running of the engine it is desired to avoid any changes in ignition timing that would occur as a result of changes in the amplitude of Vsig, and thus gain adjust is completed just at start.

To summarize, after just two articles have passed it is determined whether the signal is too big and if so the gain of amplifier 12 is reduced by a large factor, namely in this example by a factor of 4. And during passage of the following' 16 articles, the gain is adjusted upward based upon the greatest of the peak amplitudes in the transducer signal V_{H}, so that greatest peak amplitude is at a predetermined target value.

This target amplitude is just inside the dynamic range of the amplifier 12, avoiding clipping of the signal while at the same time providing a large signal Vsig with peaks just under the target value V_{TG} for enhancing accurate detection.

The DAC 67 serves essentially as A digitally-controllable resistor, and may employ the well known 2R/R type DACs connected as shown in Figure 13. Each of the three resistors shown at the top of Figure 13 have a resistance R, while the other four resistors have a resistance of 2R. The corresponding external leads of DAC 67 are shown both in the full circuit of Figure 13 and the block diagrammed DAC 67 in Figure 14.

A lead 161 is grounded while leads 162 and 164 are connected respectively to the output of the first Hall-voltage amplifier 65 and to the input of the operational amplifier 69. The four switches 151, 152, 153 and 154 represent electronic switches to which are connected the four digit count signal D₀, D₁, D₂ and D₃ from the gain counter (e.g. 85). Switches 151, 152, 153 and 154 are shown in the positions wherein all four digits in the input count signal are high and the resistance between leads 162 and 164 is at a minimum value. The paralleling resistor 71 is not essential. Resistor 71 drops the minimum resistance of the paralleled combination at the input of the operational amplifier but more importantly reduces the maximum operational amplifier input resistance, i.e. maximum Rᵢₙ.

When grounded the G-DAC 67 becomes a digitally-controllable voltage divider, and the effective resistance between conductors 162 and 164 becomes essentially a linear function of the digital count to the G-DAC 67 when R is large enough that the resistance between terminals 161 and 162 is much larger than the output impedance of the Hall-voltage amplifier 65. Thus amplifier gain is a linear function of the count.

Operation of the automatic off-set adjust circuits is as follows.

The voltage divider resistors 180 and 181 are connected across the outputs of buffer amplifiers 48 and 58. Resistors 180 and 181 may have equal values so that the voltage Vos at the center of the voltage divider is midway between the held peak voltages of Vsig, namely V_{P2} and V_{N2}.

The voltages V_{A} and V_{B} developed by divider resistors 172, 173,174 and 175 may be equidistant from Vreg/2, e.g. when Vreg is 3 volts, V_{A} may be 2.0 volts and V_{B} is then 1.0 volt. Moreover, it is preferred that the voltage divider voltages V_{A} and V_{B} respectively be a middle value, Vm, plus and minus the amount corresponding to the one bit incremental voltage, V_{Db}, of the DAC 170. This provides the tightest tolerance achievable using that particular DAC 170 without hunting.

For example, if +Vreg is 3.0 volts, the DAC 170 is a four bit DAC, and Vm is Vreg/2, then the median value of Vsig will be allowed to deviate from the range Vos +/-0.18 volts, before automatic offset correction will be effected. And when V_{A} and V_{B} are set at the divider voltages to Vm +V_{Db} and Vm -V_{Db} respectively, the hysteresis of comparators 177 and 178 may be zero.

When enabled, counter 171 is clocked and counts negative excursions in Vout. For example, when Vos is greater than Vm +/-0.18 volts, then the output of comparator 177 goes high and counter 171 is enabled for counting downward, and likewise when Vos is less than Vm +/-0.18 volts the output of comparator 178 goes high and the counter 171 is enabled for counting upward. Thus, the mid-point voltage Vos in the signal Vsig is automatically kept within the range Vm +/-0.18 volts, which compensates for all off-sets in V_{H} and those introduced by the components of the transducer-voltage amplifier 12. Alternatively, the range of automatically adjusted offset voltages at the output of DAC 170 may be centered at a voltage other than Vreg/2 to maximize the headroom in the amplifier 183.

The waveforms of Figures 15 and 16 illustrate operation of the automatic offset feature without automatic gain control. The offset voltage, Vos, drops by the amount of one DAC bit (Vdb volts in DAC 171) at time t₄, which is the time at which the peak-threshold-referenced detector produces a negative-going transition in Vout that clocks counter 171.

The ultimate intention is to present to the input of the transducer-signal detector the signal Vsig at an "off-set" level that centers the signal Vsig within the dynamic range of the detector. To do so more precisely it may be necessary, e.g. to account for an unsymmetrical signal Vsig, to set Vm away from Vreg/2 and/or to set Vos away from the center of V_{P2} and V_{N2}. These deviations from exact mid-points are in practice not expected to exceed twenty five percent of the range from the mid-points of power supply, Vreg, or the peak to peak voltage, Vₚₚ, of Vsig.

It has been found through computer generated models, that proximity detectors of the peak-referenced-threshold transducer-signal detector type, described in the above-mentioned patent application entitled DETECTION OF PASSING MAGNETIC ARTICLES AT SPEEDS DOWN TO ZERO, may advantageously merged with those of the mid-signal detecting type.

Such a detector is described in patent application Serial Number 08/587,407, filed January 17, 1996, entitled DETECTION OF PASSING MAGNETIC ARTICLES WHILE PERIODICALLY ADAPTING DETECTION THRESHOLDS TO CHANGING AMPLITUDES OF THE MAGNETIC FIELD, and assigned to the same assignee as is the present application.

A peak-referenced-threshold signal detector was advantageously merged in a computer modeling simulation with a mid-signal detector so that the peak-referenced-threshold signal detector, which is capable of operation down to zero speeds became operative in the peak-referenced-threshold mode for a short initial interval after starting, after which it automatically went into the mid-signal- threshold-referenced detection mode.

Furthermore the automatic gain control feature, that is capable of operation down to zero speeds, was incorporated with the slope-activated detector for only initially setting the gain and the level of Vsig. Automatic gain control was thereafter discontinued to avoid further step-function gain shifts which tend to cause jitter and instability in the detection distances of magnetic article approach and departure. The method of automatic gain control of this invention is especially well suited for such initial use in such a merged proximity detector because of its rapid gain adjustment and its undiminished detection efficacy at very low speeds.

Many variations in the proximity detectors of this invention are now evident, some of which are as follows.

It will be recognized that during the tracking by V_{P1} of positive slope portions of Vsig by the proximity detector of Figure 1, the comparator 14, clock 18, counter 17 and PDAC1 20 serve together as a generator of a digital signal, namely the digital count signal at the output of the counter 17, that is tracking Vsig. This digital signal generator is a digitizer of the analog signal Vsig, or is an analog-to-digital convertor.

Likewise during tracking by V_{N1}, comparator 24, clock 18, counter 27 and NDAC1 30 serve together as an analog-to-digital convertor producing a digital signal, namely the digital count signal at the output of the counter 27, that tracks negative going portions of Vsig.

In proximity detectors of this invention, digital-to-analog convertors may be formed by circuit means other than those shown here. For example, the digitally-gain-controllable amplifiers based upon use of G-DACs 67 may alternatively be based upon prior art digitally-gain-controlled amplifiers wherein there is substituted for the G-DAC a group of parallel connected branches, each containing a resistor and a binary-signal controllable switch.

It is further possible to employ just one up-down counter (instead of the up counters 17 and 27) that would count up and down in response to a high binary signal respectively from comparators 14 and 24. In this case only one DAC, e.g. PDAC1 20, may be used with the output connected to the positive and negative inputs respectively of comparators 16 and 26. In this case it will be necessary to disable the comparator 16 when tracking a negative excursion in Vsig, and to disable comparator 26 when tracking a positive excursion in Vsig.

The circuit portion in Figure 1 for generating the signal V_{toobig} may then be modified by connecting the up-down counter output to both latches 42 and 52, and enabling these latches during up counting and down counting respectively, e.g. using the signal Vout as a latches enabling signal.

As noted, the purpose of effecting automatic gain adjustment, for only a few of the first pulses in Vsig is to avoid incremental shifts in the actual distance of approaching articles at which a corresponding transition in Vout occurs. In applications such as ignition distributors, the timing of engine firing tends to cause small but annoying jumps in engine power delivery. However, when detection accuracy is an overriding consideration, it is easily possible to periodically reset counter 93 (Figure 1) to permit infrequent readjustments in gain, e.g. every minute or so, or after a predetermined number of detected articles have passed by.

Of course continuous gain adjustment is another option, e.g. accomplished in the detector of Figure 1 by removing the NOR gate 89 and connecting the Vtoobig signal directly to the enable input of the counter 85.

The Hall-amplifier output voltage Vsig may be considered a magnetic-field-to-voltage transducer output, which transducer includes the Hall element. The above-described AGC is effected by controlling the gain of a digitally controlled Hall-amplifier that may be considered part of a transducer. Alternatively, it is possible to digitally control the exciting current in the Hall element for effecting AGC of the composite transducer, e.g. by using a digitally controlled voltage regulator that is used for energizing the Hall element.

## Claims

1. A proximity-detection method for detection of passing magnetic articles comprising:
a) sensing the ambient magnetic field, generating a voltage, V_{H}, having an amplitude that is directly related to the magnetic field, and applying V_{H} to the input of an amplifier to produce at an output thereof an amplified voltage, Vsig;
b) providing a signal detector to which Vsig is applied, which detector produces a binary proximity-detector output voltage Vout having transitions of one polarity each time excursions of one polarity in Vsig reach a predetermined point therein; and
c) providing sources of DC off-set limit voltages V_{A} and V_{B} that are respectively more positive and more negative than the center of the dynamic voltage range of said detector; **characterised by** further comprising:
d) determining the median voltage, Vos, of Vsig, said median voltage having a value substantially centered between the most recent positive and negative peaks of Vsig; and
e) when at the output of said amplifier the median voltage, Vos, of Vsig is greater than V_{A}, moving the entire signal Vsig in a negative direction, and when the median value, Vos, of Vsig is less than V_{B} moving the entire signal Vsig in a positive direction to keep Vos within the range from V_{B} to V_{A}.

2. The proximity-detection method of Claim 1 additionally comprising the steps of:
a) continuously generating one reference voltage V_{P2} that is equal to the most recent peak positive going excursion in Vsig;
b) continuously generating another reference voltage V_{N2} that is equal to the most recent peak negative going excursion in Vsig; and
c) generating the median voltage, Vos, that is about at the center of the voltage range between V_{P2} and V_{N2}.

3. The proximity-detection method of Claim 1 wherein the steps of moving the entire signal Vsig is accomplished by
counting the transitions of at least one polarity in Vout during intervals when Vos is greater than V_{A} and generating a digital signal for adding to Vsig a negative compensating off-set bias voltage by one predetermined negative bias increment at each transition of the one polarity in Vout, and
counting the transitions of at least one polarity in Vout during intervals when Vos is less than V_{B} and generating a digital signal for adding to Vsig a positive compensating off-set bias voltage by one predetermined positive bias increment at each transition of the one polarity in Vout.

4. The proximity-detection method of Claim 1, wherein said amplifier is digitally gain-controlled amplifier, the method additionally comprising:
a) comparing the amplitudes of the excursions of at least one polarity in Vsig to a predetermined target value, V_{TG};
b) generating a binary signal Vbig that changes from one to another binary level each time that Vsig exceeds the target value;
c) applying the binary signal Vbig to the digitally-gain-controlled amplifier and when Vbig changes from one to another binary level changing the gain of the digitally-gain controlled amplifier by one predetermined gain increment in the direction to bring the peak values in Vsig to just below the predetermined target value.

5. The proximity-detection method of Claim 1 wherein said signal detector is of the peak-referenced-threshold signal-detector type, so that the transitions of one polarity in Vout from said signal detector occur at said point in Vsig after each peak excursion of one polarity at which the difference between the peak value and Vsig at said point equals a predetermined threshold value.

6. The proximity-detection method of Claim 1 wherein said signal detector is a peak-referenced-threshold detector that holds the peaks of at least one polarity until the signal retreats from each peak by a predetermined threshold voltage value that defines said predetermined point in Vsig.

## Patentansprüche

1. Näherungserfassungsverfahren zum Erfassen von passierenden magnetischen Teilen, das umfasst:
a) Messen des Umgebungsmagnetfeldes, Erzeugen einer Spannung V_{H}, die eine Amplitude hat, die in direkter Beziehung zu dem Magnetfeld steht, und Anlegen von V_{H} an den Eingang eines Verstärkers, um am Ausgang desselben eine verstärkte Spannung Vsig zu erzeugen;
b) Bereitstellen eines Signaldetektors, an den Vsig angelegt wird, wobei der Detektor eine binäre Näherungsdetektor-Ausgangsspannung Vout erzeugt, die Übergänge einer Polarität immer dann hat, wenn Auslenkungen einer Polarität in Vsig einen vorgegebenen Punkt darin erreichen; und
c) Bereitstellen von Offset-Grenz-Gleichspannungen V_{A} und V_{B}, die positiver bzw. negativer sind als die Mitte des dynamischen Spannungsbereiches des Detektors; **dadurch gekennzeichnet, dass** es des Weiteren umfasst:
d) Bestimmen der Mittelwertspannung Vos von Vsig, wobei die Mittelwertspannung einen Wert hat, der im Wesentlichen zwischen den aktuellsten positiven und negativen Spitzen von Vsig zentriert ist; und
e) wenn ein Ausgang des Verstärkers der Mittelwertspannung Vos von Vsig größer ist als V_{A}, Verschieben des gesamten Signals Vsig in einer Negativrichtung und wenn der Mittelwert Vos von Vsig kleiner ist als V_{B}, Verschieben des gesamten Signals Vsig in einer positiven Richtung, um Vos in dem Bereich V_{B} bis V_{A} zu halten.

2. Näherungserfassungsverfahren nach Anspruch 1, das zusätzlich die folgenden Schritte umfasst:
a) kontinuierliches Erzeugen einer Bezugsspannung V_{P2}, die der aktuellsten Spitzen-Auslenkung in positiver Richtung in Vsig entspricht;
b) kontinuierliches Erzeugen einer weiteren Bezugsspannung V_{N2}, die der aktuellsten Spitzen-Auslenkung in negativer Richtung in Vsig entspricht; und
c) Erzeugen der Mittelwertspannung Vos, die ungefähr die Mitte des Spannungsbereiches zwischen V_{P2} und V_{N2} ist.

3. Näherungserfassungsverfahren nach Anspruch 1, wobei die Schritte des Verschiebens des gesamten Signals Vsig ausgeführt werden, indem:
die Übergänge wenigstens einer Polarität in Vout während Intervallen gezählt werden, in denen Vos größer ist als V_{A}, und ein digitales Signal zum Addieren einer negativen Ausgleichs-Offset-Vorspannung in einem vorgegebenen negativen Vorspann-Inkrement an jedem Übergang der einen Polarität in Vout zu Vsig erzeugt wird, und
die Übergänge wenigstens einer Polarität in Vout während Intervallen gezählt wird, in denen Vos kleiner ist V_{B}, und ein digitales Signal zum Addieren einer positiven Ausgleichs-Offset-Vorspannung in einem vorgegebenen positiven Vorspann-Inkrement an jedem Übergang der einen Polarität in Vout zu Vsig erzeugt wird.

4. Näherungserfassungsverfahren nach Anspruch 1, wobei der Verstärker ein digital verstärkungsgeregelter Verstärker ist und das Verfahren zusätzlich umfasst:
a) Vergleichen der Amplituden der Auslenkungen wenigstens einer Polarität in Vsig mit einem vorgegebenen Sollwert V_{TG};
b) Erzeugen eines binären Signals Vbig, das sich von einem binären Pegel zum anderen immer dann ändert, wenn Vsig den Sollwert übersteigt;
c) Anlegen des binären Signals Vbig an den digital verstärkungsgeregelten Verstärker, und, wenn sich Vbig von einem binären Pegel zum anderen ändert, Ändern der Verstärkung des digital verstärkungsgeregelten Verstärkers um ein Verstärkungs-Inkrement in der Richtung, in der die Spitzen in Vsig unmittelbar unter den vorgegebenen Sollwert gebracht werden.

5. Näherungserfassungsverfahren nach Anspruch 1, wobei der Signaldetektor vom Typ Signaldetektor mit spitzenwertbezogenem Schwellenwertsignal ist, so dass die Übergänge einer Polarität in Vout von dem Signaldetektor an dem Punkt in Vsig nach jeder Spitzenwertauslenkung einer Polarität auftreten, bei der die Differenz zwischen der Spitze und Vsig an dem Punkt einem vorgegebenen Schwellenwert entspricht.

6. Näherungserfassungsverfahren nach Anspruch 1, wobei der Signaldetektor ein Detektor mit spitzenwertbezogenem Schwellenwert ist, der die Spitzen wenigstens einer Polarität hält, bis das Signal von jeder Spitze um einen vorgegebenen Schwellen-Spannungswert zurückweicht, der den vorgegebenen Punkt in Vsig definiert.

## Revendications

1. Procédé de captage de proximité pour détecter des objets magnétiques en défilement comprenant les étapes selon lesquelles:
a) on détecte le champ magnétique ambiant, génère une tension V_{H}, ayant une amplitude directement dépendante du champ magnétique, et applique V_{H} à l'entrée d'un amplificateur afin de produire à une sortie de celui-ci une tension amplifiée Vsig;
b) on emploie un capteur de signal auquel est appliquée Vsig, ce capteur produisant une tension binaire en sortie du capteur de proximité Vout, qui présente des transitions d'une polarité chaque fois que des excursions d'une polarité dans Vsig atteignent un point prédéterminé ; et
c) on emploie des sources de tension limite de décalage en courant continu V_{A} et V_{B} qui sont respectivement plus positive et plus négative que le centre de la plage de tension dynamique dudit capteur ; **caractérisé en ce qu'**il comprend de plus les étapes selon lesquelles :
d) on détermine la tension médiane Vos de Vsig, ladite tension médiane ayant une valeur sensiblement centrée entre les crêtes positive et négative les plus récentes de Vsig ; et
e) lorsque, à la sortie dudit amplificateur, la tension médiane Vos de Vsig, est supérieure à V_{A}, le signal entier Vsig est déplacé vers le négatif, et lorsque la valeur médiane Vos de Vsig, est inférieure à V_{B}, le signal entier Vsig est déplacé vers le positif pour que Vos reste située entre V_{B} et V_{A}.

2. Procédé de captage de proximité selon la revendication 1 comprenant de plus les étapes selon lesquelles:
a) on génère de manière continue une tension de référence V_{P2} égale à l'excursion de crête positive la plus récente de Vsig ;
b) on génère de manière continue une autre tension de référence V_{N2} égale à l'excursion de crête négative la plus récente de Vsig ; et
c) on génère la tension médiane, Vos, qui est proche du centre de la plage de tensions entre V_{P2} et V_{N2.}

3. Procédé de captage de proximité selon la revendication 1, dans lequel l'étape de déplacement du signal complet Vsig est accomplie par
le comptage des transitions d'une polarité au moins dans Vout au cours des intervalles où Vos est supérieure à V_{A} et la génération d'un signal numérique pour ajouter à Vsig une tension de polarisation de décalage négative de compensation par un incrément de polarisation négative prédéterminé à chaque transition de la polarité de Vout, et
le comptage des transitions d'une polarité au moins dans Vout au cours des intervalles où Vos est inférieure à V_{B} et la génération d'un signal numérique pour ajouter à Vsig une tension de polarisation de décalage de compensation positive par un incrément de polarisation prédéterminée positive à chaque transition de la polarité de Vout.

4. Procédé de captage de proximité selon la revendication 1, dans lequel ledit amplificateur est un amplificateur numérique avec contrôle de gain, le procédé comprenant également les étapes selon lesquelles:
a) on compare les amplitudes des excursions d'une polarité au moins dans Vsig, à une valeur cible prédéterminée, V_{TG} ;
b) on génère un signal binaire Vbig qui passe d'un niveau binaire à l'autre chaque fois que Vsig dépasse la valeur cible ;
c) on applique le signal binaire Vbig à l'amplificateur numérique avec contrôle de gain, et lorsque Vbig passe d'un niveau binaire à l'autre, modifiant ainsi le gain de l'amplificateur numérique avec contrôle de gain par un incrément de gain prédéterminé dans la direction permettant aux valeurs crêtes de Vsig de se situer juste en dessous de la valeur cible prédéterminée.

5. Procédé de captage de proximité selon la revendication 1,
dans lequel ledit capteur de signaux est du type des capteurs de signaux à valeur-seuil référencée par crête, si bien que les transitions d'une polarité dans Vout dudit capteur de signaux se produisent audit point dans Vsig après chaque excursion de crête d'une polarité pour laquelle la différence entre la valeur de crête et Vsig audit point équivaut à une valeur-seuil prédéterminée.

6. Procédé de captage de proximité selon la revendication 1 dans lequel ledit capteur de signaux est un capteur de signaux à valeur-seuil référencée par crête qui maintient les crêtes d'une polarité au moins jusqu'à ce que le signal se retire de chaque crête d'une valeur de tension seuil prédéterminée qui définit ledit point prédéterminé dans Vsig.
